# EUROPÄISCHE PATENTANMELDUNG

(11) **EP 3 527 463 A1**
(43) Veröffentlichungstag der Anmeldung: **21.08.2019**
(21) Anmeldenummer: 19152597.1
(22) Anmeldetag: 18.01.2019
(51) Int. Cl.: B62D 5/32

(54) **LENKAGGREGAT MIT KAMMERABSCHALTUNG**

(30) Priorität: 15.02.2018 DE 102018103437
(71) Anmelder: Hydraulik Nord Fluidtechnik GmbH & Co. KG, 19370 Parchim (DE)
(72) Erfinder: Bergmann, Erhard, 19079 Banzkow / OT Mirow (DE); Schildmann, Manfred, 19372 Karrenzin (DE); Janetzki, Steffen, 19412 Brüel (DE)
(74) Vertreter: Gulde & Partner

(57) **Zusammenfassung**

Die Erfindung betrifft eine hydraulische Lenkeinrichtung mit Kammerabschaltung (68), mit wenigstens einer Steuerhülse (16) und einem Steuerkolben (20), wobei die Steuerhülse (16) wenigstens zwei Ringkanäle für Rechtslenkung (34, 42) und zwei Ringkanäle für Linkslenkung (44, 58) aufweisen. Es ist vorgesehen, dass zwischen dem Ringkanal für Rechtslenkung (42) und dem Ringkanal für Linkslenkung (44) der Abschaltkanal (70) vorgesehen ist.

## Beschreibung

Die Erfindung betrifft ein Lenkaggregat mit Kammerabschaltung gemäß dem Oberbegriff des Patentanspruchs 1.

Lenkaggregate mit Kammerabschaltung sind seit Langem, beispielsweise aus der EP 0 746 492 B1, bekannt. Man kann mit ihnen schwere und relativ langsam fahrende Fahrzeuge sicher und komfortabel lenken.

Bei Ausfall der Ölstromversorgung, beispielsweise einer Servopumpe, reduzieren sie automatisch ein von einer Dosierpumpe in einen Lenkzylinder gefördertes Volumen an Hydraulikflüssigkeit, das pro Umdrehung des Lenkrades in den Lenkzylinder gelangt und reduzieren damit den Kraftaufwand des Fahrers bei der Lenkung des Fahrzeugs im Sinne einer Getriebeübersetzung. Die Reduktion liegt beispielsweise im Bereich um 50%, so dass die nötige Lenkkraft etwa um den gleichen Betrag abnimmt.

Damit können in vielen Fällen die gesetzlichen Vorgaben hinsichtlich eines Notlenkbetriebs erfüllt werden und zusätzlicher Aufwand wie das Vorsehen einer Notlenkpumpe oder eines Druckspeichers werden erspart.

EP 0 746 492 B1 beschreibt eine derartige konventionelle hydraulische Lenkeinrichtung mit Kammerabschaltung, die ein Steuerventil und eine Dosierpumpe mit mehreren Verdrängerkammern umfasst. Das Steuerventil besitzt einen von einem Lenkrad ansteuerbaren Steuerkolben und eine mit einem Rotor der Dosierpumpe mechanisch verbundene Steuerhülse. Der Steuerkolben und die Steuerhülse sind mit Kanälen für Hydraulikflüssigkeit ausgestattet. Die Kanäle korrespondieren dabei miteinander sowie mit der Dosierpumpe. Ferner verbinden die Kanäle die Verdrängerkammern der Dosierpumpe, über eine Zulaufleitung mit mehreren parallelen Zulaufdrosseln mit einem Lenkzylinder und den Lenkzylinder, über eine Rücklaufleitung mit mehreren parallelen Rücklaufdrosseln mit einem Rücklaufanschluss. Im Servolenkbetrieb steht mindestens eine Ebene der Zulaufdrosseln ständig mit dem Lenkzylinder in Verbindung. Eine weitere Ebene der Zulaufdrosseln ist mittels einer von der Druckdifferenz vor und nach der Dosierpumpe steuerbaren Umschalteinheit mit einem, mit einer Versorgungspumpe verbundenen Zulaufanschluss verbindbar oder mit einem Ablaufanschluss verbindbar, der wiederum mit einem Tank verbunden ist. Die erste und die zweite Ebene werden durch ein Trennungselement, zweckmäßigerweise durch je ein nicht federbelastetes Rückschlagventil getrennt.

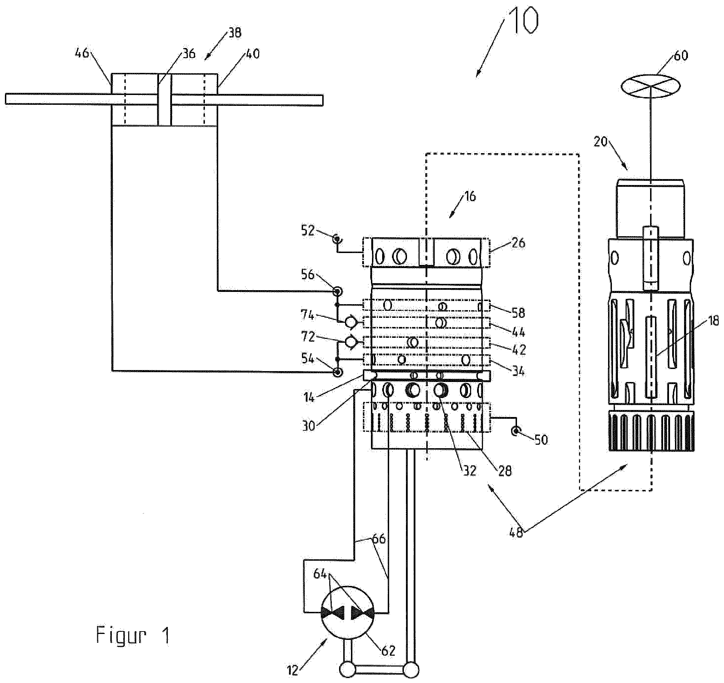

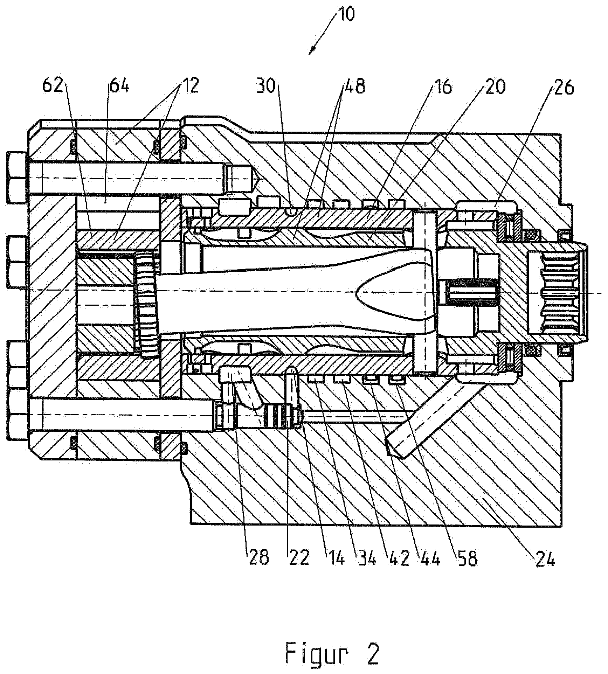

Wie anhand der Figuren 1 und 2 näher beschrieben, leiden derartige hydraulische Lenkeinrichtungen mit Kammerabschaltung jedoch häufig an Leckageströmen von Hydraulikflüssigkeit, die zum großen Teil zwischen den Ringkanälen um die Steuerhülse auftreten und je nach Drehrichtung unterschiedlich hoch sind.

Es besteht daher die Aufgabe, eine verbesserte hydraulische Lenkeinrichtung mit Kammerabschaltung der oben genannten Art zu schaffen, bei der das Auftreten eines Leckagestroms zwischen diesen Kanälen um die Steuerhülse verringert und die unvermeidbare Leckage, die in beiden Drehrichtungen auftritt, in ihrer Höhe angeglichen wird.

Die Aufgabe wird durch den Gegenstand des unabhängigen Anspruchs 1 gelöst. Weitere bevorzugte Ausgestaltungen ergeben sich aus den Unteransprüchen und der Beschreibung.

Gegenstand der Erfindung ist eine hydraulische Lenkeinrichtung mit Kammerabschaltung, mit wenigstens einer Steuerhülse und einem Steuerkolben, wobei die Steuerhülse wenigstens zwei Ringkanäle für Rechtslenkung und zwei Ringkanäle für Linkslenkung aufweist, die jeweils durch ein Rückschlagventil voneinander getrennt sind.

Erfindungsgemäß ist vorgesehen, dass der für die Kammerabschaltung notwendige Abschaltkanal mittig zwischen die Ringkanäle für Rechtslenkung und die Ringkanäle für Linkslenkung verlegt wird.

Anders, als bei der konventionellen Ausführung, liegen somit Ringkanäle für Links- und Rechtslenkung niemals direkt nebeneinander, sondern sind stets durch den Abschaltkanal voneinander getrennt. Somit sind die für die Lenkung aktivierten, mit Hydraulikdruck beaufschlagten Ringkanäle von den gerade nicht zur Lenkung aktivierten Ringkanälen stets durch den Abschaltkanal getrennt, der unter demselben Hydraulikdruck steht, wie die aktivierten Ringkanäle. Da somit kein Druckgefälle zwischen den aktivierten Ringkanälen und ihrer unmittelbaren Umgebung besteht, entsteht vorteilhaft kein Leckagestrom, der aus den aktivierten Ringkanälen austritt. Somit wird auch der hierauf zurückzuführende Lenkungsschlupf vermieden.

In bevorzugter Ausgestaltung der hydraulischen Lenkeinrichtung mit Kammerabschaltung der Erfindung ist vorgesehen, dass zwei Ringkanäle für Rechtslenkung, zwei Ringkanäle für Linkslenkung vorgesehen sind.

In weiterhin bevorzugter Ausgestaltung der hydraulischen Lenkeinrichtung mit Kammerabschaltung der Erfindung ist vorgesehen, dass der Abschaltkanal jenen Ringkanal für Rechtslenkung und jenen Ringkanal für Linkslenkung, der neben dem Abschaltkanal liegt, unmittelbar flankiert.

In weiterhin bevorzugter Ausgestaltung der hydraulischen Lenkeinrichtung mit Kammerabschaltung der Erfindung ist vorgesehen, dass der Abschaltkanal in der Art zwischen den Ringkanälen für Rechts und Links angeordnet ist, dass er den Kanälen, die im Notbetrieb abgeschaltet werden, am nächsten liegt.

In weiterhin bevorzugter Ausgestaltung der hydraulischen Lenkeinrichtung mit Kammerabschaltung der Erfindung ist vorgesehen, dass zwischen dem letzten Ringkanal für Linkslenkung und dem Ringkanal für Ablauf ein zusätzlicher Ringkanal angeordnet wird, der mit dem Lenkungszulauf verbunden ist.

Dies bietet den Vorteil, dass alle vorhandenen Ringkanäle für Rechtslenkung oder Linkslenkung einerseits auf Grund der Kommutatorbohrungen und des Abschaltkanals für Rechtslenkung und andererseits auf Grund des Abschaltkanals und des zusätzlichen Ringkanals für Linkslenkung in gleicher Weise vor Leckage geschützt sind.

In weiterhin bevorzugter Ausgestaltung der hydraulischen Lenkeinrichtung mit Kammerabschaltung der Erfindung ist vorgesehen, dass die hydraulische Lenkeinrichtung ein Steuerventil und eine Dosierpumpe umfasst, wobei das Steuerventil den von einem Lenkrad ansteuerbaren Steuerkolben und die Steuerhülse besitzt, die mit einem Rotor der Dosierpumpe mechanisch verbunden ist und der Steuerkolben und die Steuerhülse die miteinander und mit der Dosierpumpe korrespondierenden Kanäle besitzen und die Dosierpumpe mehrere Verdrängerkammern aufweist, von denen einige ständig mit einem der Zylinderanschlüsse und die anderen über den Abschaltkanal in Zusammenarbeit mit einer Umschalteinheit entweder mit einem der Zylinderanschlüsse oder dem Lenkungsablauf oder Lenkungszulauf der Lenkeinrichtung verbunden sind.

Allgemein kann die erfindungsgemäße Lenkeinrichtung mit Kammerabschaltung wie die, beispielsweise in den Figuren 1 und 2 gezeigten, konventionellen Ausführungsformen ausgebildet sein, wobei die erfindungsgemäße Anordnung des Abschaltkanals relativ zu den Ringkanälen stets zu beachten ist.

Die Erfindung ist anwendbar bei Lenkaggregaten mit Kammerabschaltung entweder mit offener oder geschlossener Neutralstellung oder LS- Ausführung sowohl mit als auch ohne Reaktionswirkung.

Die Erfindung wird nachfolgend anhand eines Ausführungsbeispiels und dazugehöriger Zeichnungen näher erläutert. Die Figuren zeigen:
- Fig. 1: zeigt wesentliche Komponenten einer konventionellen Ausführung einer hydraulischen Lenkeinrichtung mit Kammerabschaltung;
- Fig. 2: zeigt weitere Komponenten der konventionellen Ausführung einer hydraulischen Lenkeinrichtung mit Kammerabschaltung; und
- Fig. 3: zeigt die Unterschiede einer erfindungsgemäßen hydraulischen Lenkeinrichtung mit Kammerabschaltung gegenüber der konventionellen Ausführung.

Figur 1 zeigt wesentliche Komponenten einer konventionellen hydraulischen Lenkeinrichtung mit Kammerabschaltung 10, die bei Ausfall der Servounterstützung zur Verringerung des Fördervolumens der Dosierpumpe 12 beitragen. Wichtig ist dabei der Abschaltkanal 14 der Steuerhülse 16. Der Abschaltkanal 14 kann beispielsweise mit jedem zweiten Zylinderzulaufschlitz 18 des Steuerkolbens 20 fluidtechnisch verbunden werden. Wegen der Übersichtlichkeit sind die Steuerhülse 16 und der Steuerkolben 20 hier nebeneinander dargestellt. Diese sind in zusammengebautem Zustand, wie mit der gestrichelten Längsachse L angedeutet, zusammengesetzt. Der Abschaltkanal 14 stellt eine Fluidverbindung mit den erfassten Zylinderzulaufschlitzen 18 her, zwecks Weiterleitung von Hydrauliköl an eine Umschalteinheit 22 (vergleiche Figur 2 zum Stand der Technik), das in einem Gehäuse 24 der an sich bekannten hydraulischen Lenkeinrichtung mit Kammerabschaltung 10 angeordnet ist. Die Umschalteinheit 22 führt das Hydrauliköl dann entweder einem Lenkungsablauf 26 oder wieder einem Lenkungszulauf 28 der hydraulischen Lenkeinrichtung zu. Der Abschaltkanal 14 ist durch eine eingelassene Nut 30 in der Steuerhülse 16 ausgeführt. In der gezeigten herkömmlichen Ausführung ist der Abschaltkanal 14 zwischen Kommutatorbohrungen 32 und einem ersten Ringkanal für Rechtslenkung 34 angeordnet. Wird im Lenkbetrieb nun der Lenkkolben 36 des Lenkzylinders 38 gegen seinen rechten Anschlag 40 bewegt, werden in bekannte Weise der erste Ringkanal für Rechtslenkung 34 und zweite Ringkanal für Rechtslenkung 42 mit Hydraulikdruck beaufschlagt. Wie in Figur 1 gezeigt, wird der erste Ringkanal für Rechtslenkung 34 dabei vom Abschaltkanal 14 flankiert. Da der Abschaltkanal 14 unter dem gleichen Hydraulikdruck steht, fließt kein Leckagestrom an Hydrauliköl vom ersten Ringkanal für Rechtslenkung 34 in Richtung des Abschaltkanals 14. Allerdings wird der zweite Ringkanal für Rechtslenkung 42, neben dem ersten Ringkanal für Rechtslenkung 34, auch vom ersten Ringkanal für Linkslenkung 44 flankiert. Dieser ist bei Anschlag des Lenkkolbens 36 am rechten Anschlag 40 mit dem Lenkungsablauf 26 verbunden. Demzufolge besteht hier eine Druckdifferenz zwischen dem zweiten Ringkanal für Rechtslenkung 42 und dem ersten Ringkanal für Linkslenkung 44, so dass hier ein Leckagestrom auftreten kann, der zu erhöhtem Schlupf in der Lenkung führen kann. Der Schlupf kann hoch und darüber hinaus auch ungleichmäßig in Bezug auf eine Links- oder Rechtslenkung ausfallen, was deutliche Nachteile für das Lenkverhalten bedeutet.

Analog kann, im Falle einer Linkslenkung gegen den linken Anschlag 46 des Lenkzylinders 38, ein Leckagestrom vom ersten Ringkanal für Linkslenkung 44 zum zweiten Ringkanal für Rechtslenkung 42 auftreten, da in diesem Zustand der zweite für Ringkanal für Rechtslenkung 42 mit dem Lenkungsablauf 26 verbunden ist. Zusätzlich kann ein zweiter Leckölstrom vom zweiten Ringkanal für Linkslenkung 58 zum Ringkanal für den Lenkungsablauf 26 fließen. Der Schlupf ist in der Linksrichtung deshalb gewöhnlich höher als in der Rechtsrichtung.

Zum besseren Verständnis zeigen die Figuren 1 und 2 weiterhin Merkmale, die der beschriebenen konventionellen hydraulischen Lenkeinrichtung mit Kammerabschaltung 10 üblicherweise zuzuordnen sind und die dem Fachmann geläufig sind. Gezeigt sind beispielsweise dass die Steuerhülse 16 und der Steuerkolben 20 zusammen ein Steuerventil 48 bilden.

Die Steuerhülse 16 wird außerdem umfasst von einem Ringkanal für den Zulaufanschluss 28, der in den Zylinderanschluss 50 mündet und einem Ringkanal für den Lenkungsablauf 26, der in den Zylinderanschluss 52 mündet sowie Ringkanäle 34 und 42, die in den Zylinderanschluss für Rechtslenkung 54 münden und Ringkanäle 44 und 58, die in den Zylinderanschluss für Linkslenkung 56 münden. Ferner sind das Lenkrad 60, ein Rotor 62 sowie Verdrängerkammern 64 der Dosierpumpe 12 gezeigt. Außerdem ist angedeutet, wie die Kanäle 66 mit der Dosierpumpe 12 korrespondieren. Des Weiteren sind ein Rückschlagventil 72 für die Trennung des zweiten Ringkanals für Rechtslenkung 42 vom ersten Ringkanal 34 und ein Rückschlagventil 74 für die Trennung des zweiten Ringkanals für Linkslenkung 58 vom ersten Ringkanal 44 dargestellt. Die Trennung erfolgt im Notbetrieb und bewirkt, dass das jeweils geförderte Öl im Notbetrieb vom zweiten Ringkanal in den mit dem Ab- oder Zulauf verbundenen ersten Ringkanal abfließt.

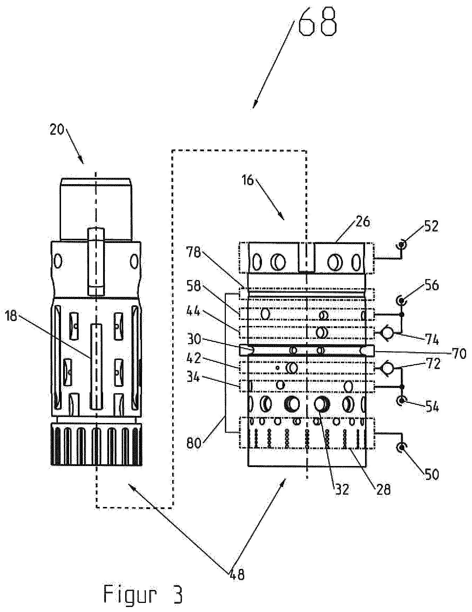

Figur 3 zeigt, wie sich eine erfindungsgemäße hydraulische Lenkeinrichtung mit Kammerabschaltung 68 von der konventionellen hydraulische Lenkeinrichtung mit Kammerabschaltung 10 unterscheidet. Bezüglich jener Merkmale, die sich hierbei nicht unterscheiden oder wo dies für die Erfindung nicht wesentlich ist, werden identische Bezugszeichen verwendet.

Die Steuerhülse 16 der erfindungsgemäßen hydraulischen Lenkeinrichtung mit Kammerabschaltung 68 weist in der gezeigten Ausführungsform ebenfalls einen ersten Ringkanal für Rechtslenkung 34, einen zweiten Ringkanal für Rechtslenkung 42, einen ersten Ringkanal für Linkslenkung 44 und einen zweiten Ringkanal für Linkslenkung 58 auf.

Erfindungsgemäß ist zwischen einem aneinander angrenzenden Ringkanal für Rechtslenkung 42 und Ringkanal für Linkslenkung 44 der Abschaltkanal 70 vorgesehen. Dieser steht im Falle einer Rechts- oder Linkslenkung gegen einen Anschlag 40 oder 46 stets unter demselben Hydraulikdruck, wie entweder die Ringkanäle für Rechtslenkung 34, 42 oder wie die Ringkanäle für Linkslenkung 44, 58. Somit bildet der sich in der sich in der erfindungsgemäßen Lage befindliche Abschaltkanal 70 eine Druckbarriere, die einen Leckagestrom von den Ringkanälen für Rechtslenkung 34, 42 hin zu den Ringkanälen für Linkslenkung 44, 58 (oder umgekehrt) verhindert.

Der Abschaltkanal 70 flankiert dabei den zweiten Ringkanal für Rechtslenkung 42 und den ersten Ringkanal für Linkslenkung 44, also die Ringkanäle, die im Notbetrieb mit dem Ablauf 26 oder dem Zulauf 28 verbunden werden unmittelbar.

Darüber hinaus ist der erste Ringkanal für Rechtslenkung 34 neben den Kommutatorbohrungen 32 der Steuerhülse 16 angeordnet, so dass auch in diese Richtung kein Leckagestrom auftreten kann.

Um zusätzlich einen Leckagestrom aus dem zweiten Ringkanal für Linkslenkung 58, entlang der Längsachse L in Richtung Ablauf 26, zu vermeiden, ist dort neben dem zweiten Ringkanal für Linkslenkung 58 ein zusätzlicher Ringkanal 78 vorgesehen. Der zusätzliche Ringkanal 78 ist mit dem Ringkanal Lenkungszulauf 28 der Steuerhülse 16 über eine Verbindungsleitung 80 verbunden. Allgemein ist der zusätzliche Ringkanal 78 also zwischen dem letzten Ringkanal zur Linkslenkung 58 und dem Ablauf 26 angeordnet.

Die erfindungsgemäße hydraulische Lenkeinrichtung mit Kammerabschaltung 68 kann in bekannter Weise weitere Merkmale umfassen (vergleiche Figuren 1 und 2). Diese umfassen insbesondere die Bildung des Steuerventils 48 und die Dosierpumpe 12, wobei das Steuerventil 48 den von dem Lenkrad 60 ansteuerbaren Steuerkolben 20 und die Steuerhülse 16 besitzt, die mit dem Rotor 62 der Dosierpumpe 12 mechanisch verbunden ist und der Steuerkolben 20 und die Steuerhülse 16 die miteinander und mit der Dosierpumpe 12 korrespondierenden Kanäle 66 besitzen und die Dosierpumpe 12 mehrere Verdrängerkammern 64 aufweist, von denen einige ständig mit einem der Zylinderanschlüsse (54, 56) und die anderen über den Abschaltkanal 70 in Zusammenarbeit mit der Umschalteinheit 22 entweder mit einem der Zylinderanschlüsse (54, 56) oder dem Lenkungsablauf 26 oder Lenkungszulauf 28 der Lenkeinrichtung 68 verbunden sind.

### Bezugszeichenliste

- 10: konventionelle hydraulische Lenkeinrichtung mit Kammerabschaltung
- 12: Dosierpumpe
- 14: Abschaltkanal in herkömmlicher Lage
- 16: Steuerhülse
- 18: Zylinderzulaufschlitz
- 20: Steuerkolben
- 22: Umschalteinheit
- 24: Gehäuse
- 26: Ringkanal für Lenkungsablauf
- 28: Ringkanal für Lenkungszulauf
- 30: Nut für Kammerabschaltung
- 32: Kommutatorbohrungen
- 34: erster Ringkanal für Rechtslenkung
- 36: Lenkkolben
- 38: Lenkzylinder
- 40: rechter Anschlag
- 42: zweiter Ringkanal für Rechtslenkung
- 44: erster Ringkanal für Linkslenkung
- 46: linker Anschlag
- 48: Steuerventil
- 50: Zylinderanschluss Lenkungszulauf
- 52: Zylinderanschluss Lenkungsablauf
- 54: Zylinderanschluss für Rechtslenkung
- 56: Zylinderanschluss für Linkslenkung
- 58: zweiter Ringkanal für Linkslenkung
- 60: Lenkrad
- 62: Rotor
- 64: Verdrängerkammern
- 66: Kanäle
- 68: erfindungsgemäße hydraulische Lenkeinrichtung mit Kammerabschaltung
- 70: Abschaltkanal in erfindungsgemäßer Lage
- 72: Rückschlagventil Rechtslenkung
- 74: Rückschlagventil Linkslenkung
- 78: zusätzlicher Ringkanal
- 80: Verbindungsleitung
- L: Längsachse

## Patentansprüche

1. Hydraulische Lenkeinrichtung mit Kammerabschaltung (68), mit wenigstens einer Steuerhülse (16) und einem Steuerkolben (20), wobei um die Steuerhülse (16) im Gehäuse (24) wenigstens zwei Ringkanäle für Rechtslenkung (34, 42) und zwei Ringkanäle für Linkslenkung (44, 58) angeordnet sind, **dadurch gekennzeichnet, dass** zwischen dem Ringkanal für Rechtslenkung (42) und dem Ringkanal für Linkslenkung (44), die im Notbetrieb über die Umschalteinheit (22) entweder mit dem Ablauf (26) oder dem Zulauf (28) verbunden sind, der Abschaltkanal (70) vorgesehen ist.

2. Hydraulische Lenkeinrichtung mit Kammerabschaltung (68) nach Anspruch 1, **dadurch gekennzeichnet, dass** der Abschaltkanal (70) jenen Ringkanal für Rechtslenkung (42) und jenen Ringkanal für Linkslenkung (44), der neben dem Abschaltkanal (70) liegt, unmittelbar flankiert.

3. Hydraulische Lenkeinrichtung mit Kammerabschaltung (68) nach einem der vorhergehenden Ansprüche, weiterhin umfassend ein Steuerventil (48) und eine Dosierpumpe (12), wobei das Steuerventil (48) den von einem Lenkrad (60) ansteuerbaren Steuerkolben (20) und die Steuerhülse (16) besitzt, die mit einem Rotor (62) der Dosierpumpe (12) mechanisch verbunden ist und der Steuerkolben (20) und die Steuerhülse (16) die miteinander und mit der Dosierpumpe (12) korrespondierenden Kanäle (66) besitzen und die Dosierpumpe (12) mehrere Verdrängerkammern (64) aufweist, von denen einige ständig mit einem der Zylinderanschlüsse (50, 52) und die anderen über den Abschaltkanal (70) in Zusammenarbeit mit einem Ventil (22) entweder mit einem der Zylinderanschlüsse (50; 52) oder dem Lenkungsablauf (26) oder Lenkungszulauf (28) der Lenkeinrichtung verbunden sind.
